Europäisches Patentamt

European Patent Office

Office européen des brevets

(11) Publication number: **0 036 307**
**A2**

# EUROPEAN PATENT APPLICATION

(21) Application number: **81301057.6**

(22) Date of filing: **13.03.81**

(51) Int. Cl.³: **G 01 F 11/08**
**C 02 F 1/76**

(30) Priority: **14.03.80 GB 8008653**

(43) Date of publication of application:
**23.09.81 Bulletin 81/38**

(84) Designated Contracting States:
**AT BE CH DE FR IT LI LU NL SE**

(71) Applicant: **Pharaoh, Peter Leonard George
Lavender Cottage 2 Water Tower Road
Broadstone Dorset(GB)**

(72) Inventor: **Pharaoh, Peter Leonard George
Lavender Cottage 2 Water Tower Road
Broadstone Dorset(GB)**

(74) Representative: **Szczuka, Jan Tymoteusz et al,
Cruikshank & Fairweather 19 Royal Exchange Square
Glasgow G1 3AE Scotland(GB)**

(54) Liquid metering apparatus and method.

(57) This invention relates to apparatus for controlled discharge of a first liquid (2) into a second liquid (30). Known such apparatus is unreliable and/or subject to the risk of inadvertent mixing of the liquids via the discharge control means.

According to the present invention the apparatus comprises a first container (1) for containing the first liquid (2); a second container (13) for containing the second liquid (30); a liquid outlet (14) from said first container (1) to feed first liquid output therefrom to said second container (13); and a displacement member (7) which is movable in response to a predetermined change in liquid level (32, 33) in said second container (13) to displace a predetermined quantity of said first liquid (2) from said first container (1) through said liquid outlet (14) to said second container (13).

FIG. 1

LIQUID METERING APPARATUS AND METHOD

The present invention relates to liquid metering apparatus suitable for use in dispensing a predetermined quantity of a first liquid into a given amount of a second liquid.

Previously known apparatus is relatively complex and/or suffers from various disadvantages. One such disadvantage which is of particular significance, especially where the apparatus is being used to dispense sterilising agent into water, is the possibility of contamination of the first liquid supply with the second liquid via the control means used to control the dispensing of the first liquid relative to the amount of the second liquid e.g. by low-pressure induced back-flow thereby changing the dilution ratio of the first liquid to the second during subsequent operations.

It is an object of the present invention to provide an improved apparatus which minimises such disadvantages.

The present invention provides apparatus for controlled discharge of a first liquid into a second liquid, characterized in that said apparatus comprises a first container for containing said first liquid; a second container for containing said second liquid; a liquid outlet from said first container to feed first liquid output therefrom to said second container; a displacement member which is movable in response to a predetermined change in liquid level in said second container to displace a predetermined quantity of said first liquid from said first container through said liquid outlet to said second container.

In a preferred aspect the present invention provides a liquid metering apparatus for use in dispensing a predetermined quantity of a first liquid in response to dispensing of a predetermined quantity of a second liquid, said apparatus comprising a chamber for containing a first liquid and having a first liquid inlet means arranged for maintaining the first liquid level in the chamber, in use of the apparatus, with a first liquid supply means, up to a predetermined level; a displacement member having a first side in communication with the interior of the chamber and a second side in communication with the interior of a passage means, said first and second sides being substantially sealed from each other and said passage means having an end remote from the displacable member disposable in use of the apparatus, in relation to a container of the second liquid so that a predetermined change in the level of the second liquid and any first liquid added thereto in said container corresponding to a predetermined quantity of said second liquid transmits a predetermined pressure change through the passage means to the displacable member to displace it to produce a predetermined change in the internal volume of the chamber; and a first liquid outlet means arranged for dispensing a predetermined quantity of said first liquid, in use of the apparatus, in response to said predetermined change in the internal volume of the chamber.

In a further aspect the present invention provides an apparatus of the invention as defined above wherein the remote end of the passage means is disposed at a first predetermined level in a second liquid chamber, said second liquid chamber having inlet means for receiving first liquid from the first liquid outlet means of the first liquid chamber, inlet means for second liquid, and first and second liquid outlet means arranged for discharging first and second liquid from said second liquid chamber, in use of the apparatus, when the level of the second liquid and the first liquid added thereto reaches a second predetermined level, down to a third predetermined level, the difference between said second and third predetermined levels corresponding to a predetermined quantity of second liquid with a predetermined quantity of a first liquid added thereto.

The present invention also provides a method of dispensing a first liquid contained in a first container into a second liquid in a second container in a predetermined ratio characterized by the steps of providing an apparatus comprising a first container for containing said first liquid; a second container for containing said second liquid; a liquid outlet from said first container to feed first liquid output therefrom to said second container; a displacement member which is movable in response to a predetermined change in liquid level in said second container to displace a predetermined quantity of said first liquid from said first container through said liquid outlet to said second container.

By means of the present invention the dispensing of the first liquid is controlled by the quantity of the second liquid in a simple and direct manner which substantially avoids contamination of the first liquid by the second liquid.

Further preferred features and advantages of the invention will appear from the following description given by way of example of two preferred embodiments of the invention illustrated with reference to the accompanying drawings in which:

Fig. 1 is a schematic elevation of a liquid metering apparatus of the invention;

Fig. 2 is a corresponding view on a reduced scale showing the metering apparatus of Fig. 1 in use with a second liquid chamber; and

Fig. 3 is a detail view corresponding to Fig. 1 illustrating a modified apparatus of the invention.

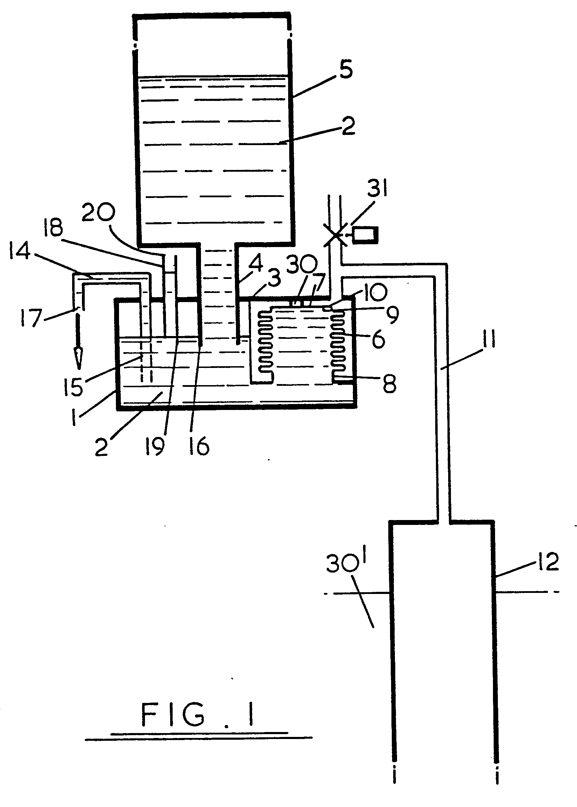

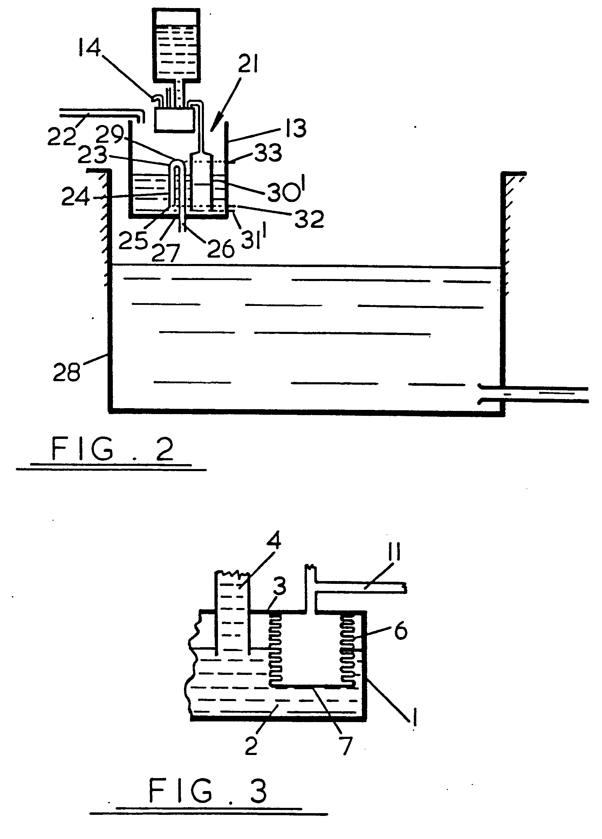

Fig. 1 shows a liquid metering apparatus comprising a chamber 1 for containing a first liquid 2. The chamber 1 has in its roof 3 a first liquid inlet means 4 in the form of the neck of an upended bottle 5 containing a supply of first liquid 2. At one side of the chamber 1 is provided a liquid-tight bellows unit 6 (shown only schematically) which has a closed end 7 and an open end 8. A first interior side 9 of the closed end 7 is in communication with the interior of the chamber 1 through the downwardly disposed open end 8 of the bellows unit 6. The other, second, side 10 of the closed end 7 is in direct communication with the interior of a passage means 11 which is provided with a downwardly disposed belled-out end 12 which is disposed in a second liquid chamber 13 (see Fig. 2), at a first predetermined level 31.

A first liquid outlet means 14 is in the form of a generally U-shaped tube having a longer leg 15 extending downwardly into the chamber 1 below the bottom end 16 of the first liquid inlet means 4 and a shorter leg 17 extending downwardly towards the second liquid chamber 13. In addition an atmospheric balancing pipe 18 extends downwardly through the roof 3 of the chamber 1 and has its lower end 19 at a level above the bottom end 16 of the first liquid inlet means 4 and its upper end 20 disposed at a level above the highest point of the first liquid outlet means 14.

As may be seen in Fig. 2 the second chamber 13 is open at the top 21 for receiving first liquid 2 from the first liquid outlet 14 and second liquid via a second liquid supply pipe 22.

The second liquid chamber 13 has first and second liquid outlet means in the form of a generally U-shaped tube 23 having a shorter leg 24 extending downwardly to a third predetermined level 25 and a longer leg 26 extending downwardly through the floor 27 of the chamber 13, towards a first and second liquid reservoir 28.

Although the above apparatus may be used for any combination of liquids, it is particularly convenient for use in the sterilisation of water where it is required to add relatively small amounts of a sterilising agent such as "Chloros" (trade name )(sodium hypochlorite) – the first liquid, to untreated water – the second liquid, to a high degree of precision.

In use of the above apparatus, untreated water is fed more or less continuously into the second chamber 13 via the supply pipe 22. As the water level rises in the second chamber 13 air is trapped in the belled-out lower end 12 of the passage 11 and compressed therein to exert a downward pressure on the closed end 7 of the bellows unit 6 which serves as a displacable member and is gradually displaced downwardly as the bellows unit is increasingly compressed. This results in an effective reduction in the internal volume of the chamber 1 and as the sterilising liquid is expelled from within the interior of the bellows unit 6 through its open end 8, the sterilising liquid is forced up into the air relief tube 18 up to a level corresponding to the highest level of the U-shaped outlet tube 14 and discharged through said U-shaped outlet tube 14 into the second chamber 13.

When the level of the untreated water (now treated) and the sterilising liquid reaches a second predetermined level 33 at the closed upper end 29 of the U-shaped tube 23, the treated water begins to syphon out of the second chamber 13 into a treated water reservoir 28. Immediately this occurs, the pressure in the passage 11 begins to fall and the closed end 7 of the bellows unit 6 begins to return to its normal "starting" position and sterilising liquid ceases to be dispensed from the outlet tube 14. The level of the treated water in the chamber 13 continues to fall until it reaches the third predetermined level 32 at the lower end 25 of the shorter leg 24
of the U-shaped tube 23. The closed end 7 of the bellows
unit 6 continues to rise until it comes into contact with
a suitable stop 30. As the bellows unit 6 expands drawing
sterilising liquid into it, the level of sterilising
liquid in the first chamber 1 falls until it is below the
lower end 16 of the liquid inlet 4, whereupon first liquid
is dispensed into the chamber 1 from the bottle 5 in the
same way as water is dispensed from a demand water bottle
as used for providing drinking water to animals.

The above cycle will then be repeated.

It will of course be appreciated that the above
mode of operation is dependent upon the syphon discharge
rate of the treated water being substantially greater than
the supply rate of untreated water and/or the supply of
untreated water being discontinued during syphoning.

It will also be appreciated that the above
apparatus is of relatively simple constitution, easy to
maintain and operate by relatively unskilled personnel,
does not require the use of electricity, avoids the use
of sterilising agents such as chlorine gas which are
difficult and possibly dangerous to handle. The apparatus
is actually "powered" very simply by atmospheric pressure
and a working head. Thus the apparatus is particularly
suited for use in less developed countries for treating
local supplies of water.

In addition the apparatus can offer a high
degree of precision and a wide range of ratio of quantity
of first liquid dispensed relative to quantity of second
liquid. The main factors affecting and controlling these
are the following. The displacement rate of the closed
end 7 of the bellows 6 depends on the shape and dimension
of the passage means 11 (normally fixed) and the spring
rate of the bellows which is normally constant to a high degree of precision whilst being practically independent of the conditions inside the first liquid chamber due to the presence of the atmospheric balancing pipe 18. The starting position of the bellows may be readily varied by providing the stop 30 with suitable adjustment means (not shown) for raising or lowering it relative to the bellows 6.

An additional element of control that may be introduced if desired is the provision of an air relief valve 31 in the passage means 11 arranged to be controlled by a suitable monitor (not shown) provided for monitoring the concentration of the sterilising liquid in the water reservoir 28 so that in the event that this should become high, gas will be vented from the passage 11 and no pressure (or only a reduced pressure) transmitted to the bellows 6. By this means the dispensing of the sterilising liquid can be stopped or reduced independently of the amount of water passing through the second chamber 13.

Although the bellows unit has particular advantages such as the provision of a frictionless interface between the fluids on either side of the displacable member constituted by the closed end and complete isolation of these fluids from each other, other displacable members may also be used such as for example a piston and cylinder optionally provided with resilient biasing means in the form of a return spring - in the case of the above described bellows, the corrugated side walls of the bellows themselves function as resilient biasing means. Also dispositions of the displacable member other than that illustrated in the drawings may be employed e.g. it may be mounted for horizontal movement and the side in communication with the interior of the first liquid chamber may be in direct contact with the first liquid or with air above it. Nevertheless the particular type of arrangement shown is expecially preferred.

The bellows unit is of course desirably made of a liquid tight material resistant to attack by the first liquid which at the same time can maintain adequate flexibility and a substantially constant spring rate over an extended period of time. A particularly preferred material is titanium.

The operation of the invention is further illustrated by the following example.

Example 1   Sterilisation of Water

Using an apparatus for sterilising water using commercially available chloros (10-12% w/v awueous sodium hypochlorite), a second chamber having an operating capacity of 1000 litres, and a bellows unit arranged to provide a displacement of 20 ml relative thereto, there is obtained treated water having a chlorine equivalent concentration of 2 mg/litre i.e. 2 p.p.m.

Thus in a preferred aspect this invention also provides a method of sterilising water comprising the addition of a sterilising liquid to untreated water using an apparatus of the invention.

The preferred bellows are made in the seamless way and are also available in brass or phosphor bronze or stainless steel.

As may be seen from the drawings in the above described embodiment the bellows unit is arranged so as to be compressible between a first fully expanded condition when the water level in the chamber 13 is at its bottom level and a compressed condition when the water level is at its upper level. Also the water level inside the belled-out lower end 12 of the passage 11 is below that in the chamber 13 when the water level is at its upper level.

Various other alternative arrangements are however also possible. Thus for example the bellows unit.

could be inverted (see Fig. 3) so that instead of being compressed as the water level rises in the chamber 13, the bellows unit is expanded. Also the device could be arranged (primed) so that the water level inside the belled-out lower end 12 is higher than in the chamber 13 so that the interior of the passage 11 is maintained at a negative pressure (below atmospheric pressure) or vacuum which pressure is increased as the chamber 13 fills. In this case the bellows unit would be expanded instead of compressed in the first case described above and vice versa in the second case.

A still further alternative would be an arrangement using for example an indirect mechanical linkage or other arrangement between the displacement member and the interior of the first chamber such that the internal volume of the latter is decreased and liquid expelled therefrom in the emptying phase instead of in the filling phase of the second chamber.

## CLAIMS

1. Apparatus for controlled discharge of a first liquid (2) into a second liquid (30), characterized in that said apparatus comprises a first container (1) for containing said first liquid (2); a second container (13) for containing said second liquid (30); a liquid outlet (14) from said first container (1) to feed first liquid output therefrom to said second container (13); a displacement member (7) which is movable in response to a predetermined change in liquid level (32,33) in said second container (13) to displace a predetermined quantity of said first liquid (2) from said first container (1) through said liquid outlet (14) to said second container (13).

2. Apparatus as claimed in Claim 1 wherein the first container (1) comprises at least one wall and said displacement member (7) constitutes at least part of said wall.

3. Apparatus as claimed in Claim 2 wherein the displacement member (7) is flexible or expansible.

4. Apparatus as claimed in Claim 2 or Claim 3 wherein the displacement member (7) is a bellows (6).

5. Apparatus as claimed in any one of Claims 1 to 4 in which the displacement member (7) is responsive to fluid pressure changes resulting from said predetermined change in liquid level (32,33).

6. A liquid metering apparatus for use in dispensing a predetermined quantity of a first liquid (2) in response to dispensing of a predetermined quantity of a second liquid (30), characterized in that said apparatus comprises a chamber (1) for containing a first liquid (2), said chamber (1) having a first liquid inlet means (4); a first liquid supply means (5) connected to said first liquid inlet means (4) for maintaining the first liquid level in the chamber up to a predetermined level; a displacement member (7) having a first side (9) in communication with the interior of the chamber (1) and a second side (10); a passage means (14) having an interior in communication with said second side (10) of the displacement member (7); said first and second sides (9,10) of said displacement member (7) being substantially sealed from each other and said passage means (14) having an end remote from the displacable member (7) which end is disposable in use of the apparatus, in relation to a container (12) of the second liquid (30) so that a predetermined change in the level (32,33) of the second liquid (30) and any first liquid (2) added thereto in said container (13) corresponding to a predetermined quantity of said second liquid (2), transmits a predetermined pressure change through the passage means (14) to the displacable member (7) to displace it to produce a predetermined change in the internal volume of the chamber (2); and a first liquid outlet means (14) arranged for dispensing a predetermined quantity of said first liquid (2), in response to said predetermined change in the internal volume of the chamber (2) wherein said remote end of the passage means (14) is disposed at a first predetermined level (31) in said second liquid container (13) and said second liquid container (13) has inlet means (31) for receiving first liquid (2) from the first liquid outlet means (14) of the first liquid chamber, (1), inlet means (22) for second liquid (30), and first and second liquid outlet means (23) arranged for discharging first and second liquid (2,30) from said second liquid container (13) when, in use of the apparatus, the level of the second liquid (30) and the first liquid (2) added thereto reaches a second predetermined level (33), down to a third predetermined level (32), the difference between said second and third predetermined levels corresponding to a predetermined quantity of second liquid (30) with a predetermined quantity of a first liquid (2) added thereto and wherein there is provided a resilient biasing means (6) arranged for resiliently resisting displacement of the displacement member (7) in response to the predetermined pressure change, said displacement member and resilient biasing means being constituted by a bellows means (6) formed of a resiliently deformable material.

7.   Apparatus according to Claim 5 wherein the first liquid outlet means (14) is in the form of an unrestricted passage and has an outlet end (17), which outlet end (17) is disposed above the predetermined first liquid level in said chamber (1) and wherein said chamber (1) includes means (5) for maintaining said chamber (1) at a superatmospheric pressure whereby, in use of the device, first liquid (2) is maintained in said first liquid outlet means (14) up to said outlet end (17) thereof and displacement of the displacement member (7) results in displacement of first liquid (2) out of said outlet end (17) of said first liquid outlet means (14).

8.   Apparatus according to Claim 6 wherein said bellows (6) is formed and arranged so as to be expansible from a first interior volume condition to a second larger interior volume condition in response to an increase in pressure in the passage means in response to a predetermined increase in level of the second liquid (30) and any first liquid (2) added thereto and wherein said first side (9) of the displacement member (7) is disposed internally of said bellows (6).

9.   Apparatus according to Claim 6 wherein said bellows (6) is formed and arranged so as to be compressible from a first interior volume condition to a second smaller interior volume condition in response to an increase in pressure in the passage means in response to a predetermined increase in level of the second liquid (30) and any first liquid (2) added thereto and wherein said second side (10) of the displacement member (7) is disposed internally of said bellows (6).

10. A method of dispensing a first liquid (2) contained in a first container (1) into a second liquid (30) in a second container (13) in a predetermined ratio characterized by the steps of providing an apparatus comprising a first container (1) for containing said first liquid (2); a second container (13) for containing said second liquid (30); a liquid outlet (14) from said first container (1) to feed first liquid output therefrom to said second container (13); a displacement member (7) which is movable in response to a predetermined change in liquid level (32,33) in said second container (13) to displace a predetermined quantity of said first liquid (2) from said first container (1) through said liquid outlet (14) to said second container (13).

11. A liquid metering apparatus for use in dispensing a predetermined quantity of a first liquid (2) in response to dispensing of a predetermined quantity of a second liquid (30), said apparatus comprising a chamber (1) for containing the first liquid (2) and having a first liquid outlet means (14) for dispensing, in use of the device, first liquid (2) from said chamber (1) into a container (13) containing said second liquid (30) characterized in that said chamber (1) is provided with a first liquid inlet means (4) arranged for maintaining the first liquid level in the chamber (1), in use of the apparatus with a first liquid supply means (5), up to a predetermined level; a displacement member (7) having a first side (9) in communi-cation with the interior of the chamber (1) and a second side (10) in communication with the interior of a passage means (11), said first and second sides (9,10) being substantially sealed from each other and said passage means (11) having an end remote from the displacable member (7) disposable in use of the apparatus, in relation to said container (13) of the second liquid so that a predetermined change in the level (32,33) of the second liquid (30) and any first liquid (2) added thereto in said container (13) corresponding to a predetermined quantity of said second liquid (30) transmits a predetermined pressure change through the passage means (11) to the displacable member (7) to displace it to produce a predetermined change in the internal volume of the chamber (1); and in that said first liquid outlet means (14) is arranged for dispensing a predetermined quantity of said first liquid (2), in use of the apparatus, in response to said predetermined change in the internal volume of the chamber (1).

1/2

FIG . 1

FIG . 2

FIG . 3